# EUROPEAN PATENT APPLICATION

(11) **EP 3 587 357 A1**
(43) Date of publication of application: **01.01.2020**
(21) Application number: 18382464.8
(22) Date of filing: 22.06.2018
(51) Int. Cl.: C02F 1/24, C02F 1/44

(54) **SYSTEM FOR THE TREATMENT OF WATER BY MEANS OF DISSOLVED AIR FLOTATION AND FILTRATION MEMBRANES**

(71) Applicant: Tecnoquimico Exterior, S.A.U. (TECEXSA), 20850 Mendaro (Gipuzkoa) (ES)
(72) Inventor: SALUTREGUI ARMAS, José, Manuel, 20850 MENDARO (Gipuzkoa) (ES)
(74) Representative: Herrero & Asociados, S.L.

(57) **Abstract**

The present invention relates to an integrated system for the treatment of water by means of dissolved air flotation and filtration membranes, wherein the flotation/aggregation area and the filtration area are in one and the same tank. An agitation air collection hood which prevents the flotation system from stopping while cleaning the membranes is arranged over the membranes of the filtration area.

## Description

### Field of the Art

The invention belongs to the water treatment sector, particularly to dissolved air flotation and membrane systems.

### Background of the Invention

A dissolved air flotation (DAF) system is a system responsible for removing particles suspended in contaminated water by means of air microbubbles. Solids adhere to the microbubbles as they float upwards to an upper separation system. The DAF equipment tank for purifying plants that work by supersaturation is divided into two chambers or receptacles. The first chamber is referred to as the contact area and the second chamber is the separation area; both chambers are separated by a deflector or baffle.

The purpose of the contact area is to make it easier for floc particles and air bubbles to collide with one another and come together. The air bubbles with flocs enclosed therein are referred to as bubble-floc aggregates. Water forces the suspension of aggregates, free bubbles, and flocculate particles that have not come together to the second chamber, i.e., the separation area. Here, the free bubbles and the aggregates can move up to the surface of the tank. A floating layer made up of a mixture of bubbles and flocculate particles forced by the bubbles is formed on the surface of the tank. This surface layer consolidates over time, producing sludge, referred to as floated sludge layer, which is removed from the tank by means of a surface clearing system. The clarified water is extracted from the lower part of the tank and part of this water enters the system again as a recirculation flow.

In turn, ultrafiltration (UF) is a type of membrane filtration in which the hydrostatic pressure forces a liquid against a semipermeable membrane. Suspended solids and high molecular weight solutes are retained, while water and low molecular weight solutes go through the membrane. This separation process is used in industry and research for purifying and concentrating macromolecular solutions.

Patent application US2004/0217058 A1 describes combining both DAF and UF applications in a single system, which leads to space and cost savings since the DAF system removes certain elements that damage the membranes. However, this treatment system has the handicap that the need to clean the membranes often leads to slowing down or even shutting down the system for this maintenance operation.

### Summary of the Invention

The object of the present invention is to provide a system integrating dissolved air flotation with membrane ultrafiltration which prevents civil work cost and sludge collection problems, and enables continuous operation without having to perform shutdowns for membrane maintenance. For this purpose, the present invention provides an integrated system for the treatment of water by means of dissolved air flotation and filtration membranes, wherein the flotation/aggregation area and the filtration area are in one and the same tank. An agitation air collection hood with an upper air outlet is arranged over the membranes of the filtration area. The tank is provided on its surface with a sludge collection carriage with longitudinal translation means to which there is attached a surface scraper and a lower scraper. The lower scraper is preferably adapted to vary its height inside the tank. The lower part of the tank is preferably provided with respective drains for purging the sludge, one drain in the aggregation area and another drain in the filtration area. As a result of the hood, the air and part of the dirt will not be able to move upwards and break the surface sludge layer, so it is not necessary to shut the flotation system down when cleaning the membranes.

### Brief Description of the Drawings

For the purpose of helping to better understand the features of the invention and to complement this description, the following illustrative and non-limiting drawings are attached as an integral part thereof:
Figure 1 shows the invention (side view) put into practice with a dissolved air flotation (DAF) section.
Figure 2 shows the invention put into practice with two dissolved air flotation sections.
Figure 3 is an (elevational) view of the invention in which the placement of the scrapers can be better seen.

### Detailed Description

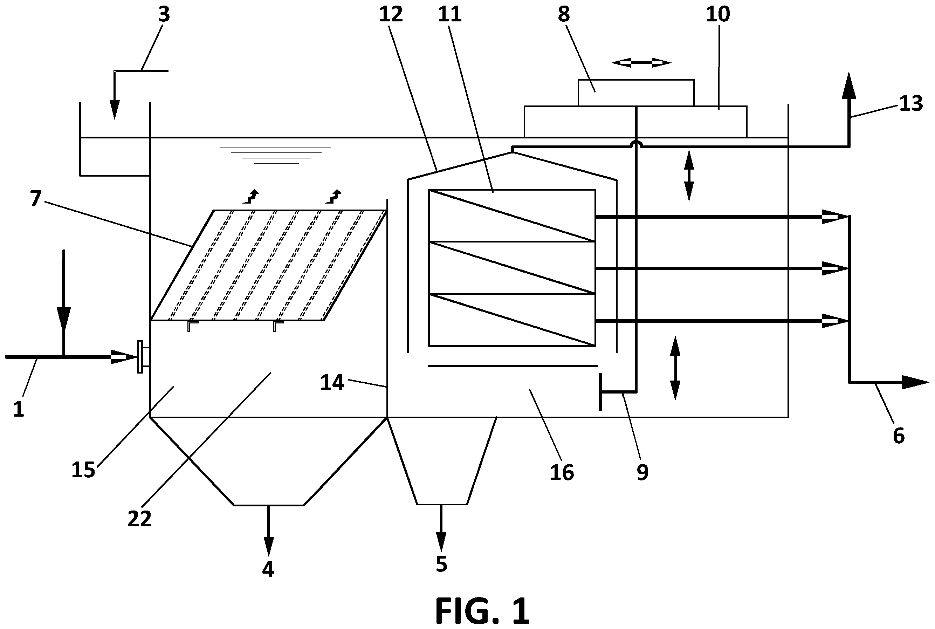

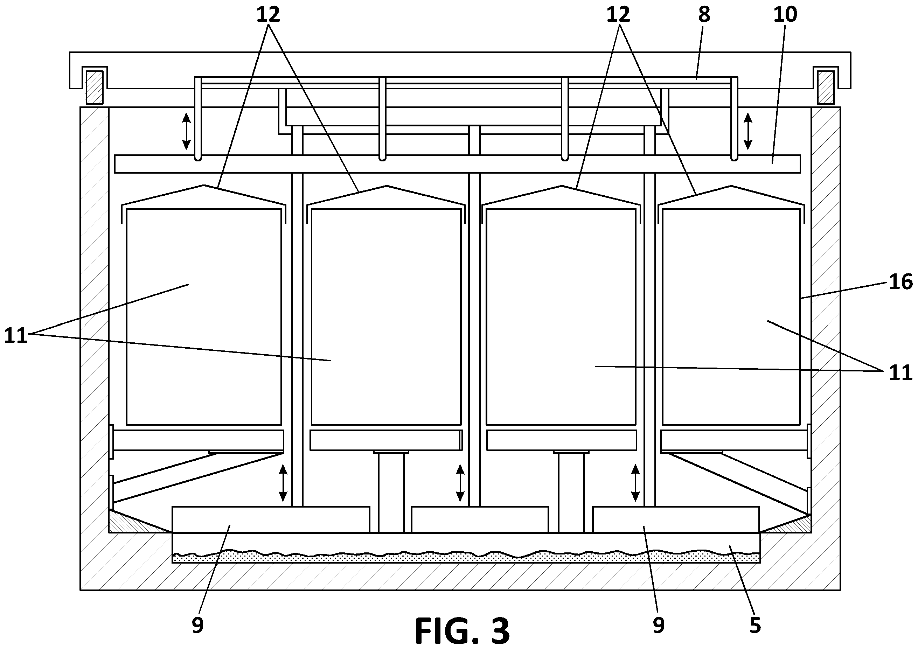

In reference to Figure 1, the integral system comprises a water inlet 1 for the entry of water to be treated into a tank 22, a flotation or aggregation section 15, and a filtration section 16 with membranes 11 seen in this drawing as a pack, although there can be several of them (see Figure 3). The membranes are preferably submerged ultrafiltration membranes. There is a partitioning wall 14 between the flotation section and the filtration section for keeping the first contact phase in the DAF process separated from the solid separation phase. The agitation air collection hood 12 with an air outlet in the upper part 13 can be seen arranged over the membranes. Air is injected through the membranes while cleaning said membranes 11 in the filtration area. As a result of the hood, the air and part of the dirt are prevented from moving upwards and breaking the surface sludge layer. It is therefore not necessary to shut the flotation system down when cleaning the membranes. The sludge collection carriage 8 preferably has a longitudinal translational movement (see arrows) for longitudinal translation to and from the upper sludge collection receptacle 3. The surface scraper 10 is responsible for driving the continuous sludge layer that builds up on the surface once the particles have gone through the membranes. Sludge precipitated at the lower part is directed with the lower scraper 9 to purging drains 4 and 5 located in the aggregation area 15 and in the filtration area 16, respectively.

Optionally, a system consisting of lamellae 7 which prevent a turbulent flow from occurring can be incorporated so as to increase the working speed in the DAF area, making it the same as the working speed of the UF area, and therefore increasing performance. The lamellae usually have an inclination between 45° and 60°.

As can be seen in Figure 3, the lower scraper is divided into segments to keep clear of posts for holding the UF membrane packs which are placed widthwise inside the tank 22 (the width of the tank is understood as the direction perpendicular to the water inlet, which would be the longitudinal dimension). The membrane packs are placed on supports having the same width as said pack, but the supports are anchored either to the bottom of the tank 22 or to its side walls by means of thinner posts, leaving room for the segments of the lower scraper. Both the upper scraper and the lower scraper are additionally provided with a lifting system. In the case of the upper scraper, this is necessary so that the surface sludge does not consolidate in areas other than the collection areas. In the case of the lower scraper, it allows being used at the same time as the upper scraper or preventing the use thereof when it is not necessary.

Once the aeration and filtration processes have come to an end, the treated water leaves through point 6.

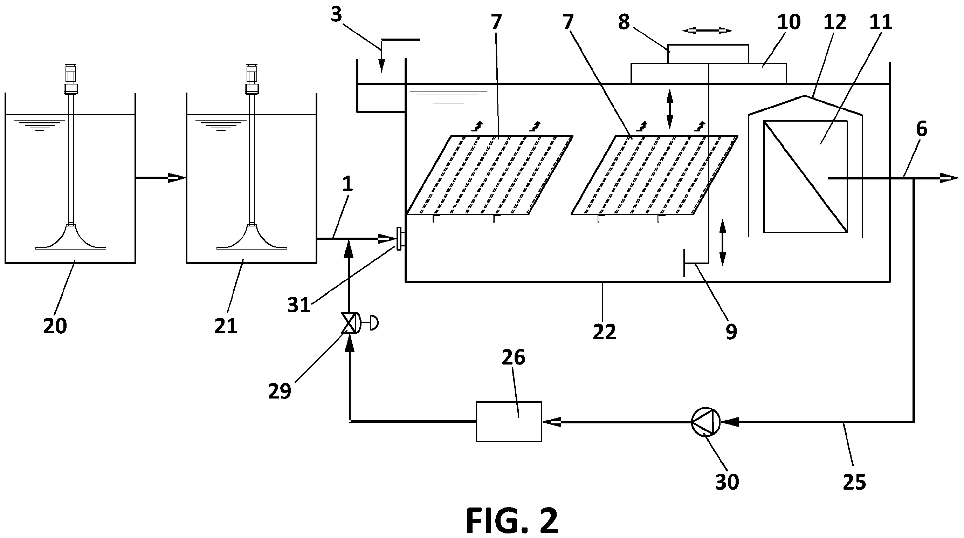

Before treating the water in the tank of the invention, as can be seen in Figure 2, the water is subjected to a coagulation process in tank 20 and a flocculation process in tank 21. The raw water thus treated passes through the inlet 1 through a valve 31 into tank 22 to be treated in the first DAF section which can optionally include the lamellae 7 as explained above. Part of the contaminants will move upwards to the surface of the tank entrained by air bubbles and another part will remain in the water until the second DAF section where the method is repeated. The water then passes into the filtration area 16. The clarified water leaves the tank 22 through valve 6 and is partly recirculated through conduit 25 as a result of pressurization pump 30. The clarified water is saturated by means of air inlet 26 and once it is depressurized in valve 29, it is recirculated to tank 22, which favors flotation and concentration by particle flotation.

In view of this description and drawings, one skilled in the art will be able to understand that the invention has been described according to several preferred embodiments thereof, but multiple variations can be introduced in said preferred embodiments without going beyond the object of the invention as claimed.

## Claims

1. Integrated system for the treatment of water by means of dissolved air flotation and filtration membranes, comprising a tank (22) with at least one flotation area (15) and a filtration area (16) with membranes (11) and a sludge collection carriage (8) on the surface thereof, **characterized in that** it comprises an agitation air collection hood arranged over the membranes of the filtration area (11).

2. System according to claim 1, wherein the sludge collection carriage is provided with longitudinal translation means for longitudinal translation in the direction in which the water enters the tank (22).

3. System according to any of the preceding claims, wherein the sludge collection carriage (8) is provided with a surface scraper (10) and a lower scraper (9), both scrapers being adapted to vary their height inside the tank (22).

4. System according to claim 3, wherein the lower scraper (9) is divided into different sections.

5. System according to any of the preceding claims, wherein the lower part of the tank is provided with respective drains for purging the sludge, i.e., one drain in the flotation area (4) and another drain in the filtration area (5).

6. System according to any of the preceding claims incorporating lamellae (7) in the flotation area.

7. System according to any of the preceding claims, wherein the membranes are submerged ultrafiltration membranes.
